# EUROPEAN PATENT APPLICATION

(11) **EP 4 568 357 A1**
(43) Date of publication of application: **11.06.2025**
(21) Application number: 23849055.1
(22) Date of filing: 13.06.2023
(51) Int. Cl.: H04W 52/02

(54) **HARQ FEEDBACK METHOD AND APPARATUS, AND READABLE STORAGE MEDIUM**

(30) Priority: 04.08.2022 CN 202210931546
(71) Applicant: Datang Mobile Communications Equipment Co., Ltd., Beijing 100085 (CN)
(72) Inventor: ZHANG, Xiangdong, Beijing 100085 (CN); XU, Meng, Beijing 100085 (CN); MIAO, Jinhua, Beijing 100085 (CN)
(74) Representative: Studio Torta S.p.A.
(86) International application number: PCT/CN2023/099903
(87) International publication number: WO 2024/027345

(57) **Abstract**

An HARQ feedback method and apparatus, and a readable storage medium are provided, and relate to the technical field of communications. The method includes: determining, by a terminal, first information; and performing, by the terminal, an HARQ feedback according to the first information; where the first information includes one or more of: remaining service time of a current serving cell, a location of the terminal, a measurement result of a reference signal of a cell where the terminal is located, and indication information of a network device.

## Description

### CROSS REFERENCE OF RELATED APPLICATION

The present disclosure claims the priority of Chinese patent application No. 202210931546.3 filed on August 4, 2022 in China, which is incorporated herein by reference in its entirety.

### TECHNICAL FIELD

The present disclosure relates to the technical field of communications, and in particular, to a Hybrid Automatic Repeat Request (HARQ) feedback method and apparatus, and a readable storage medium.

### BACKGROUND

The downlink scheduling includes downlink dynamic scheduling and Semi-Persistent Scheduling (SPS).

When a downlink scheduling indicates a new transmission (i.e., a New Data Indicator (NDI) is flipped, or a transport Block (TB) is transmitted for the first time), if the decoding is successful, a physical layer is indicated to generate an Acknowledgement (ACK); if the decoding is failed, the physical layer is notified to replace the data in a cache and generate a Negative Acknowledgement (NACK). When the downlink scheduling indicates a retransmission (i.e., the NDI is not flipped or the TB is not transmitted for the first time), a Medium Access Control (MAC) layer indicates the physical layer to merge the received and cached data and make a joint decoding, and if the decoding is successful, the physical layer is indicated to generate an ACK; if the decoding is failed, the physical layer is notified to replace the data in the cache and generate an NACK. In a scenario of Non-Terrestrial Networks (NTNs), an HARQ feedback supporting an HARQ process is disabled.

In some scenarios, such as a scenario of discontinuous coverage, a terminal performs an HARQ feedback according to the existing mechanism, but a network device cannot receive the HARQ feedback from the terminal, which will waste the power consumption of the terminal.

### SUMMARY

The embodiments of the present disclosure provide an HARQ feedback method and apparatus, and a readable storage medium, so as to save the power consumption of a terminal.

In a first aspect, an embodiment of the present disclosure provides an HARQ feedback method, including:
determining, by a terminal, first information; and
performing, by the terminal, an HARQ feedback according to the first information;
where the first information includes one or more of:
remaining service time of a current serving cell, a location of the terminal, a measurement result of a reference signal of a cell where the terminal is located, and indication information of a network device.

Optionally, the first information includes the remaining service time of the current serving cell; the performing, by the terminal, an HARQ feedback according to the first information includes:
if the remaining service time of the current serving cell is greater than or equal to a first threshold, performing an HARQ feedback by the terminal; or,
if the remaining service time of the current serving cell is less than the first threshold, performing no HARQ feedback by the terminal.

Optionally, the method further includes:
receiving, by the terminal, the service remaining time transmitted by the network device.

Optionally, the first information includes the location of the terminal; the performing, by the terminal, an HARQ feedback according to the first information includes:
if a distance between a current location of the terminal and a first reference point of the current serving cell is greater than or equal to a second threshold, or if a distance between the current location of the terminal and a second reference point of a next serving cell is less than a third threshold, performing no HARQ feedback by the terminal; or,
if the distance between the current location of the terminal and the first reference point is less than the second threshold, or if the distance between the current location of the terminal and the second reference point is greater than or equal to the third threshold, performing an HARQ feedback by the terminal.

Optionally, the first information includes the measurement result of the reference signal of the cell where the terminal is located; the performing, by the terminal, an HARQ feedback according to the first information includes:
if the measurement result obtained by the terminal in the current serving cell is less than a fourth threshold, performing no HARQ feedback by the terminal; or,
if the measurement result obtained by the terminal in the current serving cell is greater than or equal to the fourth threshold, performing an HARQ feedback by the terminal.

Optionally, the method further includes:
receiving, by the terminal, a threshold transmitted by the network device, where the threshold includes one or more of:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

Optionally, the threshold is configured based on an HARQ process or a cell.

Optionally, the first information includes indication information of a network device; the performing, by the terminal, an HARQ feedback according to the first information includes:
if the indication information indicates the terminal to perform an HARQ feedback, performing an HARQ feedback by the terminal; or,
if the indication information indicates the terminal not to perform an HARQ feedback, performing no HARQ feedback by the terminal.

Optionally, the method further includes:
receiving, by the terminal, second information of the network device, where the second information indicates the terminal to determine whether to perform the step of performing an HARQ feedback according to the first information.

In a second aspect, an embodiment of the present disclosure provides an HARQ feedback method, including:
transmitting, by a network device, third information to a terminal, so that the terminal performs an HARQ feedback according to the third information;
where the third information includes one or more of:
remaining service time of a current serving cell, and indication information.

Optionally, the method further includes:
transmitting, by the network device, one or more of the following thresholds to the terminal:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

Optionally, the threshold is configured based on an HARQ process or a cell.

Optionally, the indication information indicates the terminal to perform an HARQ feedback, or the indication information indicates the terminal not to perform an HARQ feedback.

Optionally, the method further includes:
transmitting, by the network device, second information to the terminal, where the second information indicates the terminal to determine whether to perform the step of performing an HARQ feedback according to the first information.

In a third aspect, an embodiment of the present disclosure provides an HARQ feedback apparatus applied to a terminal, including: a memory, a transceiver, and a processor;
the memory is configured to store a computer program; the transceiver is configured to transmit and receive data under the control of the processor; and the processor is configured to read the computer program in the memory and perform the following operations:
determining first information; and
performing an HARQ feedback according to the first information;
where the first information includes one or more of:
remaining service time of a current serving cell, a location of the terminal, a measurement result of a reference signal of a cell where the terminal is located, and indication information of a network device.

In a fourth aspect, an embodiment of the present disclosure provides an HARQ feedback apparatus applied to a network device, including: a memory, a transceiver, and a processor;
the memory is configured to store a computer program; the transceiver is configured to transmit and receive data under the control of the processor; and the processor is configured to read the computer program in the memory and perform the following operation:
transmitting third information to a terminal, so that the terminal performs an HARQ feedback according to the third information;
where the third information includes one or more of:
   remaining service time of a current serving cell, and indication information.

In a fifth aspect, an embodiment of the present disclosure provides an HARQ feedback apparatus applied to a terminal, including:
a first obtaining unit configured to determine first information; and
a first feedback unit configured to perform an HARQ feedback according to the first information;
where the first information includes one or more of:
   remaining service time of a current serving cell, a location of the terminal, a measurement result of a reference signal of a cell where the terminal is located, and indication information of a network device.

In a sixth aspect, an embodiment of the present disclosure provides an HARQ feedback apparatus applied to a network device, including:
a first transmitting unit configured to transmit third information to a terminal, so that the terminal performs an HARQ feedback according to the third information;
where the third information includes one or more of:
   remaining service time of a current serving cell, and indication information.

In a seventh aspect, an embodiment of the present disclosure provides a processor-readable storage medium which stores a computer program, where the computer program enables a processor to perform the steps in the aforementioned HARQ feedback method.

In the embodiments of the present disclosure, the terminal performs an HARQ feedback according to the obtained information, so that the terminal can determine whether it is necessary to perform an feedback HARQ, thereby saving the power consumption of the terminal.

### BRIEF DESCRIPTION OF THE DRAWINGS

FIG. 1 illustrates a first flowchart of an HARQ feedback method according to an embodiment of the present disclosure;
FIG. 2 illustrates a second flowchart of an HARQ feedback method according to an embodiment of the present disclosure;
FIG. 3 illustrates a first structural diagram of an HARQ feedback apparatus according to an embodiment of the present disclosure;
FIG. 4 illustrates a second structural diagram of an HARQ feedback apparatus according to an embodiment of the present disclosure;
FIG. 5 illustrates a third structural diagram of an HARQ feedback apparatus according to an embodiment of the present disclosure; and
FIG. 6 illustrates a fourth structural diagram of an HARQ feedback apparatus according to an embodiment of the present disclosure.

### DETAILED DESCRIPTION

In the embodiments of the present disclosure, the term "and/or" describes an association relationship between associated objects, and means that there may be relationships. For example, A and/or B may mean three situations, i.e., A exists alone, A and B both exist, and B exists alone. The character "/" generally indicates that the contextually associated objects are an "or" relationship.

In the embodiments of the present disclosure, the term "a plurality of" means two or more, and other quantifiers are similar.

The technical solutions in the embodiments of the present disclosure will be clearly and completely described below with reference to the drawings. Obviously, those described are only a part, rather than all, of the embodiments of the present disclosure. Based on the embodiments of the present disclosure, any other embodiment obtained by those of ordinary skill in the art without paying any creative effort should fall within the protection scope of the present disclosure.

The embodiments of the disclosure provide an HARQ feedback method and apparatus, so as to save the power consumption of a terminal.

In which, the method and the apparatus are based on the same application concept. Because the principle for the method to solve the problems is similar to that for the apparatus, the implementations of the apparatus and the method can be referred to each other, and the repeated content is omitted.

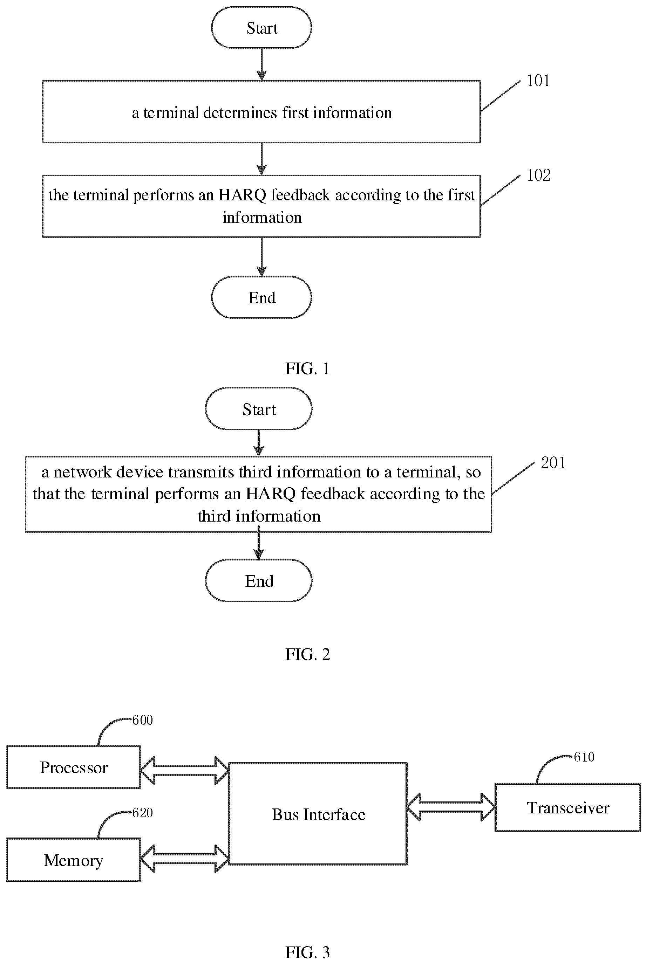

Referring to FIG. 1, which illustrates a first flowchart of an HARQ feedback method according to an embodiment of the present disclosure. As shown in FIG. 1, the method includes:
Step 101: a terminal determines first information.

In which, the first information includes one or more of:
remaining service time of a current serving cell, a location of the terminal, a measurement result of a reference signal of a cell where the terminal is located, and indication information of a network device.

In which, the remaining (service) time of the current serving cell refers to a remaining time for the current serving cell to serve the terminal, that is, after the remaining (service) time, the current serving cell will no longer serve the terminal. The current serving cell refers to a cell where the terminal (non-connected terminal) is currently camping, or a cell where the terminal establishes a Radio Resource Control (RRC) connection.

The location of the terminal may include a specific location of the terminal such as latitude and longitude information, and may further include a location relationship between the location of the terminal and a certain reference point, such as a location relationship between the terminal and a reference point of the current serving cell, or a location relationship between the terminal and a reference point of a next serving cell.

The measurement result of the reference signal of the cell where the terminal is located may include Reference Signal Received Power (RSRP), a Reference Signal Receiving Quality (RSRQ), or the like.

The indication information of the network device may include an indication that indicates to perform an HARQ feedback or an indication that indicates not to perform an HARQ feedback.

Step 102: the terminal performs an HARQ feedback according to the first information.

It should be noted that the performing an HARQ feedback may include that the terminal transmits or does not transmit an ACK/NACK to the network device.

If the first information includes one or more of the remaining service time of the current serving cell, the location of the terminal, and the measurement result of the reference signal of the cell where the terminal is located, the terminal may compare the first information with a corresponding threshold to obtain a comparison result, and perform an HARQ feedback according to the comparison result. In which, different first information may be corresponding to the same or different thresholds. The threshold may be pre-configured or obtained from the network device.

If the threshold is obtained from the network device, the terminal receives the threshold transmitted by the network device, and the threshold includes one or more of:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

In which, the first reference point or the second reference point may be set as required, and for example may be a cell edge point, a cell center point, a cell earth center point, a vertical projection location of a satellite on an earth surface, etc. The magnitude of each threshold may also be set as required.

In the embodiment of the present disclosure, the network device may transmit the above threshold to the terminal through Downlink Control Information (DCI), an RRC message, a broadcast message or the like. Accordingly, the terminal may receive the threshold in the above way.

In the embodiment of the present disclosure, the threshold is configured based on an HARQ process or a cell, thereby improving the feedback flexibility. Specifically, the above threshold is configured based on each HARQ process or each cell.

In which, a configuration based on an HARQ process may be understood as that a corresponding threshold is configured for each HARQ process, or a threshold is uniformly configured for all HARQ processes of a terminal. When the configuration is made based on the HARQ process, the network device may configure a threshold after receiving an HARQ NACK of an initial transmission, or configure a threshold when an HARQ process is initially scheduled. In practice, the services transmitted by some HARQ processes are not sensitive to a packet loss, so an HARQ feedback may not be performed for such HARQ processes. Thus, the threshold may be configured based on the HARQ process. Of course, the network device may not distinguish the HARQ processes, but uniformly make a configuration for all HARQ processes of a terminal. Under the condition that the terminal does not perform an HARQ feedback, the network device can improve the transmission reliability by repeated transmission.

A configuration based on a cell refers to uniformly configuring a threshold for the HARQ processes of all terminals in a cell, which may be understood as that the HARQ processes of all terminals in the cell have the same threshold.

Depending on different contents of the first information, in this step, the terminal may perform an HARQ feedback in different ways.

Specifically, in this step, the first information includes the service remaining time of the current serving cell. If the remaining service time of the current serving cell is greater than or equal to a first threshold, the terminal performs an HARQ feedback; or, if the remaining service time of the current serving cell is less than the first threshold, the terminal does not perform an HARQ feedback. If the terminal does not perform an HARQ feedback, the network device may choose to perform repeated transmission to improve the reliability.

In which, as mentioned above, the first threshold may be configured by the network device, or may be a preset value such as 1/2 Round Trip Time (RTT), i.e., a half of the RTT. The remaining service time of the current serving cell may be transmitted to the terminal by the network device or determined by the terminal. For example, for an earth fixed cell, the terminal may calculate the remaining service time according to a distance between a current location thereof and an edge of the current serving cell and a moving speed of the terminal. Similarly, the network device may also judge the remaining service time of the current serving cell according to the location of the terminal itself, ephemeris information and a coverage of the current serving cell and transmit the remaining service time to the terminal.

Specifically, in this step, the first information includes the location of the terminal. If the distance between the current location of the terminal and the first reference point of the current serving cell is greater than or equal to a second threshold, or if the distance between the current location of the terminal and the second reference point of the next serving cell is less than a third threshold, the terminal does not perform an HARQ feedback. If the distance between the current location of the terminal and the first reference point is less than the second threshold, or if the distance between the current location of the terminal and the second reference point is greater than or equal to the third threshold, the terminal performs an HARQ feedback.

For example, for a scenario of an earth moving cell, the terminal may judge whether to perform an HARQ feedback based on a relationship between the current location of the terminal and a cell boundary. For example, the terminal judges whether a distance between the current location and a first location (e.g., the location of the reference point of the current serving cell) is greater than the second threshold, or judge whether a distance between the current location and a second location (e.g., the location of the reference point of the next serving cell) is less than the third threshold. If the distance between the current location and the first location is greater than the second threshold or the distance between the current location and the second location is less than the third threshold, the terminal does not perform an HARQ feedback; otherwise, the terminal may perform an HARQ feedback.

Specifically, in this step, the first information includes the measurement result of the reference signal of the cell where the terminal is located. If the measurement result obtained by the terminal in the current serving cell is less than a fourth threshold, the terminal does not perform an HARQ feedback; or, if the measurement result obtained by the terminal in the current serving cell is greater than or equal to the fourth threshold, the terminal performs an HARQ feedback.

In which, the measurement result may be an RSRP or the like. If the measured RSRP is less than the fourth threshold, the terminal does not perform an HARQ feedback; otherwise, the terminal may perform an HARQ feedback.

In the above embodiment, if the first information includes the remaining service time of the current serving cell, the location of the terminal and a plurality of the measurement results of the reference signal of the cell where the terminal is located may be used, and the terminal may make a judgment again by combining judgment results obtained using one piece of the above information respectively, so as to determine whether to perform an HARQ feedback.

For example, if the terminal determines not to perform an HARQ feedback according to the remaining service time of the current serving cell and determines not to perform an HARQ feedback according to the location of the terminal, then the terminal may determine not to perform an HARQ feedback.

Specifically, in this step, the first information includes indication information of a network device. If the indication information indicates the terminal to perform an HARQ feedback, the terminal performs an HARQ feedback; or, if the indication information indicates the terminal not to perform an HARQ feedback, the terminal does not perform an HARQ feedback. In which, the indication information may be transmitted by the network device by means of a DCI, an RRC, or the like.

As can be seen from the above description, in the embodiment of the present disclosure, the terminal performs an HARQ feedback according to the obtained information, so that the terminal can determine whether it is necessary to perform an HARQ feedback, thereby saving the power consumption of the terminal.

Optionally, based on the above embodiment, the terminal receives second information of the network device, where the second information indicates the terminal to determine whether to carry out the step of performing an HARQ feedback according to the first information.

That is, the network device may configure whether the terminal performs the process of the embodiment of the present disclosure, especially the above process of judging the first information and the corresponding threshold.

If the network device configures that the terminal does not make the above judgment, the behavior of the terminal is not specified in the embodiment of the present disclosure, but depends on the implementation of the terminal. For example, the HARQ still may be transmitted by the terminal even if being not received by the network device. The network device does not specify the processing of data that is expected to having its feedback to be received but actually not received, and the above processing is determined by the implementation of the network device. For example, because the terminal does not feed back an NACK, the network device may consider that the terminal has successfully received the data; alternatively, because being uncertain about the success of data reception, the network device may consider that the terminal does not successfully receive the data. To be on the safe side, the network device may consider that the data is not received by the terminal and needs to be retransmitted next time. The implementation of the network device may also be related to the type of the service. For example, for a service insensitive to the packet loss, the network device may consider that the terminal has successfully received the packet; and for a service sensitive to the packet loss, the network device may consider that the packet is not successfully transmitted and needs to be retransmitted later.

In addition, in a scenario of discontinuous coverage, because the time of the discontinuous coverage may be very long, a large storage overhead will be taken for the network device to retain these data, and the network device may delete all the packets that have not been successfully transmitted. Of course, it may be assumed that if the network device cannot confirm that the data transmission is successful, the network device may notify an upper layer which packets have not been successfully transmitted, so that the upper layer can confirm how to deal with the packets that have not been confirmed to be successfully transmitted.

It should be noted that only when the terminal or a specific HARQ process of the terminal is in an HARQ enabled state, i.e., the terminal needs to perform an HARQ feedback, it is necessary for the terminal to judge whether to perform an HARQ feedback for the specific HARQ process according to the first information. If the terminal or the specific HARQ process of the terminal is in an HARQ disabled state, i.e., the terminal or the specific HARQ process of the terminal does not need to perform an HARQ feedback, it is unnecessary for the terminal to judge whether to perform an HARQ feedback according to the first information.

Referring to FIG. 2, which illustrates a flowchart of an HARQ feedback method according to an embodiment of the present disclosure. As shown in FIG. 2, the method includes:
Step 201: a network device transmits third information to a terminal, so that the terminal performs an HARQ feedback according to the third information.

In which, the third information includes one or more of:
remaining service time of a current serving cell, and indication information.

In which, the meanings of the service remaining time of the current serving cell and the indication information may refer to the description in the aforementioned method embodiment.

In which, the indication information may indicate that no HARQ feedback is performed for an HARQ process which is in an HARQ enabled state. The indication information may indicate one time of transmission or indicate a transition of the state of the HARQ process. The indication information may be transmitted to the terminal by means of an RRC, a DCI, or the like.

Specifically, for a scenario of an earth fixed cell (the coverage of the cell on the earth is fixed in a certain period of time), the network device acquires the service end time and the service remaining time of the cell in the current area, so that the network device can indicate the terminal not to perform an HARQ feedback when judging that the terminal is insufficient to perform an HARQ feedback. For a scenario of an earth moving cell (the coverage of the cell on the earth is constantly moving), if the network device can obtain an accurate location of the terminal and acquire the moving speed of its own coverage, the network device may judge the time at which the terminal is no longer covered, and then indicate the terminal not to perform an HARQ feedback when judging that the terminal is insufficient to perform an HARQ. The accurate location of the terminal refers to a location of the terminal measured and determined by the network device itself, or a location of the terminal obtained from the feedback of the terminal, or a location of the terminal obtained from a Location Management Function (LMF) of a locating server.

In which, indicating the terminal not to perform an HARQ feedback specifically means, for example, the network device may notify the terminal in the scheduling of a packet, that the packet (or, the packet and those following the packet) does not need an HARQ feedback, and/or the network device may improve the reliability by means of repeated transmission of the packet (or, the packet and those following the packet).

In practical applications, the network device may transmit the third information to the terminal by means of a DCI, an RRC message, a broadcast message, or the like.

Optionally, in the embodiment of the present disclosure, the network device may further transmit one or more of the following thresholds to the terminal:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

Through the above thresholds, the terminal may compare information included in the third information with the thresholds to perform an HARQ feedback.

In which, the configuration mode of the thresholds may also refer to the description in the aforementioned embodiments.

In the embodiment of the present disclosure, the network device transmits the third information to the terminal, so that the terminal can perform an HARQ feedback according to the obtained information and then determine whether it is necessary to perform a feedback HARQ, thereby saving the power consumption of the terminal.

Optionally, based on the above embodiment, the network device transmits second information to the terminal, where the second information indicates the terminal to determine whether to carry out the step of performing an HARQ feedback according to the first information.

For a scenario of discontinuous coverage, i.e., the service time of the serving cell is less than a certain time and there will be no coverage by any other cell in a subsequent period of time, if performing downlink scheduling at this time, the network side will not receive an HARQ feedback even if the terminal performs the HARQ feedback, so the terminal does not need to make feedback in this scenario. However, the terminal will still perform an HARQ feedback according to the existing mechanism, thereby wasting the power consumption of the terminal.

Therefore, in an embodiment of the present disclosure, the terminal performs an HARQ feedback according to the service remaining time of the current serving cell. In this embodiment, if the network device receives an HARQ NACK, a first threshold is configured. If the network device receives an HARQ ACK, the first threshold will not be configured. The process may include:

Step 301: the terminal determines the remaining service time of the current serving cell, and performs uplink and downlink data transmissions in the current serving cell.

The method for the terminal to determine the service remaining time of the current serving cell varies depending on whether the current serving cell is an earth fixed cell or an earth moving cell.

For the earth fixed cell, the terminal may judge the service remaining time of the current serving cell through the cell service end time and the current time broadcast in a cell system message.

For the earth moving cell, the terminal may judge the remaining service time of the current serving cell according to the location of the terminal itself, ephemeris information and cell coverage information. For example, the terminal determines the ephemeris information and the moving speed of a satellite in the current serving cell, as well as reference point information, elevation information and radius information of the cell coverage, etc., so as to predict the time when the terminal is about to leave the coverage of the current serving cell, and then judge the remaining service time of the current serving cell. If being able to obtain an accurate location of the terminal and acquire the moving speed of its own coverage, the network device may determine a time of serving the terminal, and transmit the time of serving the terminal to the terminal as the remaining service time of the current serving cell of the terminal.

Step 302: the network device schedules a downlink data transmission, and schedules an HARQ process in an HARQ enabled state to the terminal for a data transmission. After receiving the data transmission of the HARQ process, the terminal transmits HARQ NACK indication information according to a decoding result.

Step 303: after receiving the HARQ NACK feedback, the network device performs an HARQ retransmission on the HARQ process, and configures a first threshold, i.e., time threshold information (by DCI/RRC signaling).

Step 304: after receiving the HARQ retransmission and the first threshold, the terminal judges whether an HARQ feedback is needed according to the first threshold. If the remaining service time of the current serving cell is less than the first threshold, no HARQ feedback is performed; otherwise, an HARQ feedback is performed.

Therefore, in an embodiment of the present disclosure, the terminal performs an HARQ feedback according to the remaining service time of the terminal in the current serving cell. In this embodiment, the network device configures the first threshold when scheduling the HARQ process. The process may include:

Step 401: a terminal determines the remaining service time of the current serving cell through a broadcast message, and performs uplink and downlink data transmissions on the serving cell.

Step 402: the network device schedules a downlink data transmission, schedules an HARQ process in an HARQ enabled state for data transmission, and configures a first threshold in an RRC signaling or a DCI to judge whether an HARQ feedback should be performed for the HARQ process of the current serving cell.

Step 403: after receiving the downlink scheduling information and the first threshold, the terminal judges whether it is necessary to perform an HARQ feedback according to the first threshold information; the terminal does not perform an HARQ feedback if the remaining service time of the current serving cell is less than the first threshold, and otherwise, performs an HARQ feedback.

Therefore, in an embodiment of the present disclosure, the network device indicates the the HARQ process in an HARQ enabled state to be transitioned into an HARQ process without feedback through a DCI. The process may include:
Step 501: after accessing the current serving cell, the terminal performs uplink and downlink data transmissions on the current serving cell.
Step 502: the network device schedules a downlink data transmission and schedules the HARQ process in an HARQ enabled state for data transmission.
Step 503: the terminal receives and decodes the HARQ transmission and performs an HARQ feedback.
Step 504: after receiving the HARQ feedback, the network device judges that the terminal does not need to perform an HARQ feedback according to the service time and other information of the cell, and indicates that the HARQ retransmission does not need an HARQ feedback through a DCI.

It should be noted that the threshold in the above embodiment may be transmitted through a system message broadcast or a dedicated signaling or a physical channel (DCI).

The technical solution according to the embodiment of the present disclosure may be applicable to a plurality of systems, especially a 5G system. For example, the applicable system may be a Global System of Mobile Communication (GSM) system, a Code Division Multiple Access (CDMA) system, a Wideband Code Division Multiple Access (WCDMA) General Packet Radio Service (GPRS) system, a Long-Term Evolution (LTE) system, an LTE Frequency Division Duplex (FDD) system, an LTE Time Division Duplex (TDD) system, a Long Term Evolution Advanced (LTE-A) system, a Universal Mobile Telecommunication System (UMTS), a Worldwide Interoperability for Microwave Access (WiMAX) system, a 5G New Radio (NR) system, or the like. Each of the plurality of systems includes a terminal device and a network device. The system may further include a core network part, such as an Evolved Packet System (EPS), a 5G System (5GS) or the like.

The terminal device involved in the embodiment of the present disclosure may refer to a device that provides voice and/or data connectivity to users, a handheld device with a radio connection function, or any other processing device connected to a radio modem. The name of the terminal device may be varied in different systems. For example, in the 5G system, the terminal device may be called as User Equipment (UE). A wireless terminal device may be communicated with one or more Core Networks (CNs) via a Radio Access Network (RAN). The wireless terminal device may be a mobile terminal device, such as a mobile phone (or called as a "cellular" phone) and a computer with a mobile terminal device such as a portable, pocket-sized, hand-held, computer-built or vehicle-mounted mobile device, which exchange languages and/or data with the radio access network. For example, (the wireless terminal device) may be a Personal Communication Service (PCS) phone, a cordless phone, a Session Initiated Protocol (SIP) phone, a Wireless Local Loop (WLL) station, a Personal Digital Assistant (PDA), etc. The wireless terminal device may also be called as a system, a subscriber unit, a subscriber station, a mobile station, a mobile, a remote station, an access point, a remote terminal, an access terminal, a user terminal, a user agent and a user device, which are not limited in the embodiments of the present disclosure.

The network device involved in the embodiments of the present disclosure may be a base station that may include a plurality of cells serving the terminal. Depending on the specific application scenarios, the base station may also be called as an access point, or may be a device in an access network communicated with the wireless terminal device through one or more sectors over an air interface, or may have other names. The network device may be used to exchange the received air frames with Internet Protocol (IP) packets, and act as a router between the wireless terminal device and the rest of the access network, where the rest of the access network may include an IP communication network. The network device may also coordinate the attribute management of the air interface. For example, the network device involved in the embodiments of the present disclosure may be a network device (Base Transceiver Station, BTS) in a Global System for Mobile communications (GSM) or a Code Division Multiple Access (CDMA), or a network device (NodeB) in a Wide-band Code Division Multiple Access (WCDMA), or an evolutional network device (evolutional Node B, eNB or e-NodeB) in a Long Term Evolution (LTE) system, or a 5G base station (gNB) in a 5G network architecture (next generation system), or a Home evolved Node B (HeNB), a relay node, a femto, a pico, or the like, which are not limited in the embodiments of the present disclosure. In some network structures, the network device may include a Centralized Unit (CU) node and a Distributed Unit (DU) node, which may also be geographically separated.

The network device and the terminal device may each use one or more antennas to perform Multi Input Multi Output (MIMO) transmission. The MIMO transmission may be a Single User MIMO (SU-MIMO) or a Multiple User MIMO (MU-MIMO). Depending on the form and the number of the antenna combinations, the MIMO transmission may be a 2Dimission MIMO (2D-MIMO), a 3Dimission MIMO (3D-MIMO), a Full Dimension MIMO (FD-MIMO) or a super-large-scale MIMO (massive-MIMO), or may be a diversity transmission or a precoding transmission or a beamforming transmission, etc.

As shown in FIG. 3, an HARQ feedback apparatus according to an embodiment of the present disclosure is applied to a network device, and includes: a processor 600 configured to read a program in a memory 620 and perform the following processes:
transmitting third information to a terminal, so that the terminal performs an HARQ feedback according to the third information;
where the third information includes one or more of:
   remaining service time of a current serving cell, and indication information;
   a transceiver 610 configured to receive and transmit data under the control of the processor 600.

In which, in FIG. 3, a bus architecture may include any number of interconnected buses and bridges. Specifically, one or more processors represented by the processor 600 and various circuits of the memory represented by the memory 620 are linked together. The bus architecture may also link various other circuits, such as a peripheral device, a voltage regulator and a power management circuit, which are well known in the art and will not be further described herein. The bus interface provides an interface. The transceiver 610 may be composed of a plurality of elements, i.e., includes a transmitter and a receiver, and provides units for communications with various other devices on a transmission medium. The processor 600 is responsible for managing the bus architecture and general processing, and the memory 620 may store data used by the processor 600 during operation.

The processor 600 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor 600 is responsible for managing the bus architecture and general processing, and the memory 620 may store data used by the processor 600 during operation.

In which, the explanation of the current serving cell may refer to the description in the aforementioned method embodiments.

The processor 600 is further configured to read the program and perform the following steps:
transmitting one or more of the following thresholds to the terminal:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

In which, the indication information indicates the terminal to perform an HARQ feedback, or the indication information indicates the terminal not to perform an HARQ feedback.

The processor 600 is further configured to read the program and perform the following steps:
transmitting second information to the terminal, where the second information indicates the terminal to determine whether to carry out the step of performing an HARQ feedback according to the first information.

It should be noted here that the above apparatus according to the embodiment of the present disclosure can realize all the methodical steps realized by the network device in the aforementioned method embodiments, and achieve the same technical effect, so the parts and the advantageous effects in this embodiment the same as those in the method embodiments will not be described in detail here.

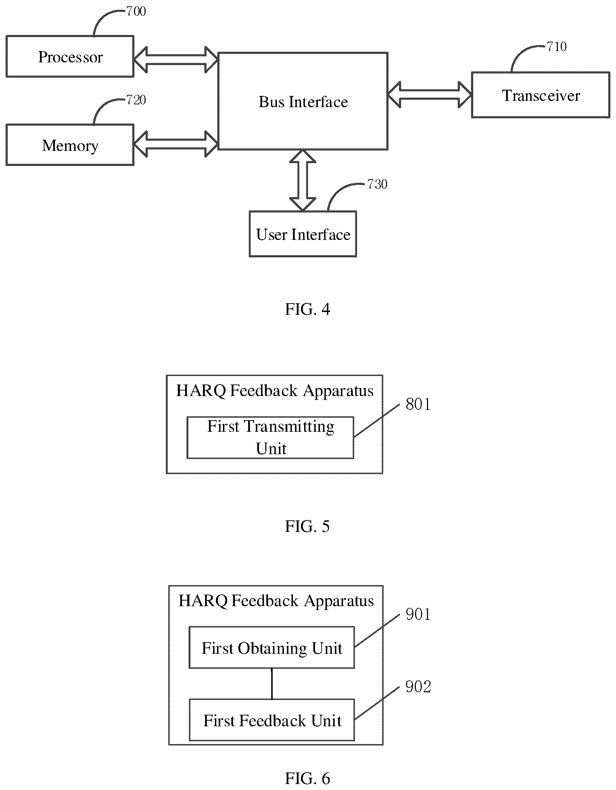

As shown in FIG. 4, an HARQ feedback apparatus according to an embodiment of the present disclosure is applied to a terminal, and includes a processor 700 configured to read a program in a memory 720 and perform the following processes:
determining first information;
performing an HARQ feedback according to the first information;
where the first information includes one or more of:
   remaining service time of a current serving cell, a location of the terminal, a measurement result of a reference signal of a cell where the terminal is located, and indication information of a network device;
   a transceiver 710 configured to receive and transmit data under the control of the processor 700.

In which, in FIG. 4, the bus architecture may include any number of interconnected buses and bridges. Specifically, one or more processors represented by the processor 700 and various circuits of the memory represented by the memory 720 are linked together. The bus architecture may also link various other circuits, such as a peripheral device, a voltage regulator and a power management circuit, which are well known in the art and will not be further described herein. The bus interface provides an interface. The transceiver 710 may be composed of a plurality of elements, i.e., includes a transmitter and a receiver, and provides units for communications with various other devices on a transmission medium. For different user devices, the user interface 730 may also be an interface capable of externally or internally connecting a required device, including but not limited to a keypad, a display, a speaker, a microphone, a joystick or the like.

The processor 700 is responsible for managing the bus architecture and general processing, and the memory 720 may store data used by the processor 700 during operation.

The processor 700 may be a Central Processing Unit (CPU), an Application Specific Integrated Circuit (ASIC), a Field-Programmable Gate Array (FPGA), or a Complex Programmable Logic Device (CPLD), and the processor may also adopt a multi-core architecture.

The processor is configured to perform any of the methods according to the embodiments of the present disclosure based on the acquired executable instruction by calling a computer program stored in the memory. The processor and the memory may also be physically separated.

In which, the contents and meanings of the SCG configuration information and the first information may refer to the description in the aforementioned method embodiments.

Optionally, if the terminal has many failures, the first information is the first information of one or more of the failures.

The processor is configured to perform any of the methods according to the embodiments of the present disclosure based on the acquired executable instruction by calling a computer program stored in the memory. The processor and the memory may also be physically separated.
the first information includes the service remaining time of the current serving cell; the processor 700 is further configured to read the program and perform the following steps:
if the remaining service time of the current serving cell is greater than or equal to a first threshold, performing an HARQ feedback; or,
if the remaining service time of the current serving cell is less than the first threshold, performing no HARQ feedback.

The processor 700 is further configured to read the program and perform the following step:
receiving the service remaining time transmitted by the network device.

The first information includes the location of the terminal; the processor 700 is further configured to read the program and perform the following steps:

if a distance between a current location of the terminal and a first reference point of the current serving cell is greater than or equal to a second threshold, or if a distance between the current location of the terminal and a second reference point of a next serving cell is less than a third threshold, performing no HARQ feedback; or,
if the distance between the current location of the terminal and the first reference point is less than the second threshold, or if the distance between the current location of the terminal and the second reference point is greater than or equal to the third threshold, performing an HARQ feedback.

The first information includes the measurement result of the reference signal of the cell where the terminal is located; the processor 700 is further configured to read the program and perform the following steps:
if the measurement result obtained by the terminal in the current serving cell is less than a fourth threshold, performing no HARQ feedback; or,
if the measurement result obtained by the terminal in the current serving cell is greater than or equal to the fourth threshold, performing an HARQ feedback.

The processor 700 is further configured to read the program and perform the following steps:
receiving a threshold transmitted by the network device, where the threshold includes one or more of:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

In which, the threshold is configured based on an HARQ process or a cell.

The first information includes the indication information of the network device; the processor 700 is further configured to read the program and perform the following steps:
if the indication information indicates the the terminal performs an HARQ feedback, performing an HARQ feedback; or,
if the indication information indicates the terminal not to perform an HARQ feedback, performing no HARQ feedback.

The processor 700 is further configured to read the program and perform the following step:
receiving second information of the network device, where the second information indicates the terminal to determine whether to carry out a process of performing an HARQ feedback according to the first information.

It should be noted here that the above apparatus according to the embodiment of the present disclosure can realize all the methodical steps realized by the terminal in the aforementioned method embodiments, and achieve the same technical effect, so the parts and the advantageous effects in this embodiment the same as those in the method embodiments will not be described in detail here.

As shown in FIG. 5, an HARQ feedback apparatus according to an embodiment of the present disclosure is applied to a network device, and includes:
a first transmitting unit 801 configured to transmit third information to a terminal, so that the terminal performs an HARQ feedback according to the third information;
where the third information includes one or more of:
remaining service time of a current serving cell, and indication information.

Optionally, the apparatus may further include:
a second transmitting unit configured to transmit one or more of the following thresholds to the terminal:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

Optionally, the threshold is configured based on an HARQ process or a cell.

Optionally, the indication information indicates the terminal to perform an HARQ feedback, or the indication information indicates the terminal not to perform an HARQ feedback.

It should be noted here that the above apparatus according to the embodiment of the present disclosure can realize all the methodical steps realized by the terminal in the aforementioned method embodiments, and achieve the same technical effect, so the parts and the advantageous effects in this embodiment the same as those in the method embodiments will not be described in detail here.

As shown in FIG. 6, an HARQ feedback apparatus according to an embodiment of the present disclosure is applied to a terminal, and includes:
a first obtaining unit 901 configured to determine first information;
a first feedback unit 902 configured to perform an HARQ feedback according to the first information; where the first information includes one or more of:
remaining service time of a current serving cell, a location of the terminal, a measurement result of a reference signal of a cell where the terminal is located, and indication information of a network device.

Optionally, the first information includes the service remaining time of the current serving cell; the first feedback unit 902 is configured to:
if the remaining service time of the current serving cell is greater than or equal to a first threshold, performing an HARQ feedback; or, if the remaining service time of the current serving cell is less than the first threshold, performing no HARQ feedback.

Optionally, the apparatus may further include:
a first receiving unit configured to receive the service remaining time transmitted by the network device.

Optionally, the first information includes the location of the terminal; the first feedback unit 902 is configured to:
if a distance between a current location of the terminal and a first reference point of the current serving cell is greater than or equal to a second threshold, or if a distance between the current location of the terminal and a second reference point of a next serving cell is less than a third threshold, performing no HARQ feedback; or,
if the distance between the current location of the terminal and the first reference point is less than the second threshold, or if the distance between the current location of the terminal and the second reference point is greater than or equal to the third threshold, performing an HARQ feedback.

Optionally, the first feedback unit 902 is configured to:
if the measurement result obtained by the terminal in the current serving cell is less than a fourth threshold, performing no HARQ feedback; or,
if the measurement result obtained by the terminal in the current serving cell is greater than or equal to the fourth threshold, performing an HARQ feedback.

Optionally, the apparatus may further include:
a second receiving unit configured to receive a threshold transmitted by the network device, where the threshold includes one or more of:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

Optionally, the threshold is configured based on an HARQ process or a cell.

Optionally, the first information includes indication information of a network device; the first feedback unit is configured to:
if the indication information indicates the terminal to perform an HARQ feedback, performing an HARQ feedback; or,
if the indication information indicates the terminal not to perform an HARQ feedback, performing no HARQ feedback.

Optionally, the apparatus may further include:
a third receiving unit configured to receive second information of the network device, where the second information indicates the terminal to determine whether to carry out a process of performing an HARQ feedback according to the first information.

It should be noted here that the above apparatus according to the embodiment of the present disclosure can realize all the methodical steps realized by the network device in the aforementioned method embodiments, and achieve the same technical effect, so the parts and the advantageous effects in this embodiment the same as those in the method embodiments will not be described in detail here.

It should be noted that the division of units in the embodiments of the present disclosure is schematic and only a logical function division, and there may be other division modes in actual implementations. In addition, various functional units in the embodiments of the present disclosure may be integrated into one processing unit or existed physically alone, or two or more units may be integrated into one unit. The integrated unit may be implemented in the form of hardware or implemented in the form of a software functional unit.

The integrated unit may be stored in a processor-readable storage medium when being implemented in the form of a software functional unit and sold or used as an independent product. Based on this understanding, the essence (in other words, a part that contributes to the related art) of the technical solution of the present disclosure, or all or part of the technical solution, can be embodied in the form of a computer software product, which is stored in a storage medium and includes a plurality of instructions for enabling a computer device (which may be a personal computer, a server, a network device, etc.) or a processor to perform all or part of the steps of the methods described in the embodiments of the present disclosure. The aforementioned storage medium includes any medium capable of storing program codes, such as a U disk, a mobile hard disk, a Read-Only Memory (ROM), a Random Access Memory (RAM), a magnetic disk or an optical disk.

The embodiments of the present application further provide a processor-readable storage medium, on which a program is stored, where when being executed by a processor, the program implements each process of the embodiments of the above information processing method, and achieves the same technical effect, which will be omitted here order to avoid repetition. In which, the readable storage medium may be any available medium or data storage device that can be accessed by the processor, including but not limited to a magnetic memory (e.g., a floppy disk, a hard disk, a magnetic tape, a magneto-optical (MO) disk, etc.), an optical memory (e.g., a Compact Disk (CD), a Digital Versatile Disc (DVD), a Blu-ray Disc (BD), a High-Definition Versatile Disc (HVD), etc.), and a semiconductor memory (e.g., an ROM, an Erasable Programmable Read-Only Memory (EPROM), an Electrically Erasable Programmable read only memory (EEPROM), a non-volatile memory (NAND FLASH), a Solid State Disk (SSD)), etc.

It should be noted that herein the term "comprise", "include" or any other variation thereof is intended to cover a non-exclusive inclusion, so that a process, method, article or apparatus including a series of elements includes not only those elements, but also other elements not explicitly listed, or elements inherent to such process, method, article or apparatus. Without further restrictions, an element defined by the statement "comprising a ..." does not exclude the existence of another identical element in the process, method, article or apparatus including the element.

From the description of the above embodiments, those skilled in the art can clearly understand that the methods of the above embodiments may be implemented by means of software and necessary general hardware platform, and of course may be implemented by means of hardware, but in many cases, the former is a better implementation. Based on this understanding, the essence (in other words, a part that contributes to the related art) of the technical solution of the present disclosure may be embodied in the form of a software product, which is stored in a storage medium (e.g., an ROM or RAM, a magnetic, an optical disk, etc.) and includes a plurality of instructions for enabling a terminal (which may be a mobile phone, a computer, a server, an air conditioner, a network device, etc.) to perform the methods described in various embodiments of the present disclosure.

The embodiments of the present disclosure have been described above with reference to the drawings, but the present disclosure is not limited to the above specific embodiments, which are only schematic rather than restrictive. Under the suggestion of the present disclosure, those of ordinary skill in the art can make many forms without departing from the spirit of the present disclosure and the protection scope of the claims, and they fall within the protection scope of the present disclosure.

## Claims

1. A Hybrid Automatic Repeat Request (HARQ) feedback method, comprising:
determining, by a terminal, first information; and
performing, by the terminal, an HARQ feedback according to the first information;
wherein the first information comprises one or more of:
remaining service time of a current serving cell, a location of the terminal, a measurement result of a reference signal of a cell where the terminal is located, and indication information of a network device.

2. The method according to claim 1, wherein the first information comprises the remaining service time of the current serving cell; the performing, by the terminal, an HARQ feedback according to the first information comprises:
if the remaining service time of the current serving cell is greater than or equal to a first threshold, performing an HARQ feedback by the terminal; or,
if the remaining service time of the current serving cell is less than the first threshold, performing no HARQ feedback by the terminal.

3. The method according to claim 2, further comprising:
receiving, by the terminal, the service remaining time transmitted by the network device.

4. The method according to claim 1, wherein the first information comprises the location of the terminal; the performing, by the terminal, an HARQ feedback according to the first information comprises:
if a distance between a current location of the terminal and a first reference point of the current serving cell is greater than or equal to a second threshold, or if a distance between the current location of the terminal and a second reference point of a next serving cell is less than a third threshold, performing no HARQ feedback by the terminal; or,
if the distance between the current location of the terminal and the first reference point is less than the second threshold, or if the distance between the current location of the terminal and the second reference point is greater than or equal to the third threshold, performing an HARQ feedback by the terminal.

5. The method according to claim 1, wherein the first information comprises the measurement result of the reference signal of the cell where the terminal is located; the performing, by the terminal, an HARQ feedback according to the first information comprises:
if the measurement result obtained by the terminal in the current serving cell is less than a fourth threshold, performing no HARQ feedback by the terminal; or,
if the measurement result obtained by the terminal in the current serving cell is greater than or equal to the fourth threshold, performing an HARQ feedback by the terminal.

6. The method according to any one of claims 1 to 5, further comprising:
receiving, by the terminal, a threshold transmitted by the network device, wherein the threshold comprises one or more of:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

7. The method according to claim 6, wherein the threshold is configured based on an HARQ process or a cell.

8. The method according to claim 1, wherein the first information comprises indication information of a network device; the performing, by the terminal, an HARQ feedback according to the first information comprises:
if the indication information indicates the terminal to perform an HARQ feedback, performing an HARQ feedback by the terminal; or,
if the indication information indicates the terminal not to perform an HARQ feedback, performing no HARQ feedback by the terminal.

9. The method according to claim 1, further comprising:
receiving, by the terminal, second information of the network device, wherein the second information indicates the terminal to determine whether to perform the step of performing an HARQ feedback according to the first information.

10. An HARQ feedback method, comprising:
transmitting, by a network device, third information to a terminal, so that the terminal performs an HARQ feedback according to the third information;
wherein the third information comprises one or more of:
remaining service time of a current serving cell, and indication information.

11. The method according to claim 10, further comprising:
transmitting, by the network device, one or more of the following thresholds to the terminal:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

12. The method according to claim 11, wherein the threshold is configured based on an HARQ process or a cell.

13. The method according to claim 10, wherein the indication information indicates the terminal to perform an HARQ feedback, or the indication information indicates the terminal not to perform an HARQ feedback.

14. The method according to claim 10, further comprising:
transmitting, by the network device, second information to the terminal, wherein the second information indicates the terminal to determine whether to perform the step of performing an HARQ feedback according to the first information.

15. An HARQ feedback apparatus applied to a terminal, comprising: a memory, a transceiver, and a processor;
the memory is configured to store a computer program; the transceiver is configured to transmit and receive data under the control of the processor; and the processor is configured to read the computer program in the memory and perform the following operations:
determining first information; and
performing an HARQ feedback according to the first information;
wherein the first information comprises one or more of:
remaining service time of a current serving cell, a location of the terminal, a measurement result of a reference signal of a cell where the terminal is located, and indication information of a network device.

16. An HARQ feedback apparatus applied to a network device, comprising: a memory, a transceiver, and a processor;
the memory is configured to store a computer program; the transceiver is configured to transmit and receive data under the control of the processor; and the processor is configured to read the computer program in the memory and perform the following operation:
transmitting third information to a terminal, so that the terminal performs an HARQ feedback according to the third information;
wherein the third information comprises one or more of:
remaining service time of a current serving cell, and indication information.

17. An HARQ feedback apparatus applied to a terminal, comprising:
a first obtaining unit configured to determine first information; and
a first feedback unit configured to perform an HARQ feedback according to the first information; wherein the first information includes one or more of:
remaining service time of a current serving cell, a location of the terminal, a measurement result of a reference signal of a cell where the terminal is located, and indication information of a network device.

18. The device according to claim 17, wherein the first information comprises the service remaining time of the current serving cell; the first feedback unit is configured to:
if the remaining service time of the current serving cell is greater than or equal to a first threshold, performing an HARQ feedback; or, if the remaining service time of the current serving cell is less than the first threshold, performing no HARQ feedback.

19. The apparatus according to claim 18, further comprising:
a first receiving unit, configured to receive the service remaining time transmitted by the network device.

20. The device according to claim 17, wherein the first information comprises the location of the terminal; the first feedback unit is configured to:
if a distance between a current location of the terminal and a first reference point of the current serving cell is greater than or equal to a second threshold, or if the distance between the current location of the terminal and a second reference point of a next serving cell is less than a third threshold, performing no HARQ feedback; or,
if the distance between the current location of the terminal and the first reference point is less than the second threshold, or if the distance between the current location of the terminal and the second reference point is greater than or equal to the third threshold, performing an HARQ feedback.

21. The device according to claim 17, wherein the first feedback unit is configured to:
if the measurement result obtained by the terminal in the current serving cell is less than a fourth threshold, performing no HARQ feedback; or,
if the measurement result obtained by the terminal in the current serving cell is greater than or equal to the fourth threshold, performing an HARQ feedback.

22. The apparatus according to any one of claims 17 to 21, further comprising:
a second receiving unit configured to receive a threshold transmitted by the network device, wherein the threshold comprises one or more of:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

23. The apparatus according to claim 22, wherein the threshold is configured based on an HARQ process or a cell.

24. The apparatus according to claim 17, wherein the first information comprises indication information of a network device; the first feedback unit is configured to:
if the indication information indicates the terminal to perform an HARQ feedback, performing an HARQ feedback; or,
if the indication information indicates the terminal not to perform an HARQ feedback, performing no HARQ feedback.

25. The apparatus according to claim 17, further comprising:
a third receiving unit configured to receive second information of the network device, wherein the second information indicates the terminal to determine whether to carry out a process of performing an HARQ feedback according to the first information.

26. An HARQ feedback apparatus applied to a network device, comprising:
a first transmitting unit configured to transmit third information to a terminal, so that the terminal performs an HARQ feedback according to the third information;
wherein the third information comprises one or more of:
remaining service time of a current serving cell, and indication information.

27. The apparatus according to claim 26, further comprising:
a second transmitting unit configured to transmit one or more of the following thresholds to the terminal:
a first threshold that indicates a threshold of the remaining service time of the current serving cell where the terminal is located;
a second threshold that indicates a threshold of a distance between a current location of the terminal and a first reference point of the current serving cell;
a third threshold that indicates a threshold of a distance between the current location of the terminal and a second reference point of a next serving cell; and
a fourth threshold that indicates a threshold of the measurement result obtained by the terminal in the current serving cell.

28. A processor-readable storage medium which stores a computer program, wherein the computer program enables a processor to perform the method according to any one of claims 1 to 14.
